# EUROPÄISCHE PATENTSCHRIFT

(11) **EP 2 519 333 B1**
(45) Veröffentlichungstag und Bekanntmachung des Hinweises auf die Patenterteilung: **23.11.2016**
(21) Anmeldenummer: 10773848.6
(22) Anmeldetag: 14.10.2010
(51) Int. Cl.: B01D 29/11, B01D 35/06

(54) **FILTERVORRICHTUNG SOWIE FILTERELEMENT ZUR BENUTZUNG BEI EINER SOLCHEN FILTERVORRICHTUNG**
FILTERING DEVICE, AND FILTERING ELEMENT FOR USE IN SUCH A FILTERING DEVICE
DISPOSITIF DE FILTRATION ET ÉLÉMENT FILTRANT DESTINÉ À ÊTRE UTILISÉ DANS UN TEL DISPOSITIF DE FILTRATION

(30) Priorität: 02.01.2010 DE 102010003961
(43) Veröffentlichungstag der Anmeldung: 07.11.2012
(73) Patentinhaber: Hydac Filtertechnik GmbH, 66280 Sulzbach/Saar (DE)
(72) Erfinder: WILKENDORF, Werner, 66564 Ottweiler (DE); BACKES, Volker, 66646 Marpingen (DE)
(74) Vertreter: Bartels, Martin Erich Arthur
(86) Internationale Anmeldenummer: PCT/EP2010/006292
(87) Internationale Veröffentlichungsnummer: WO 2011/079884

(56) Entgegenhaltungen:
- EP-A1- 1 731 210
- WO-A1-02/062447
- WO-A1-2008/022813
- DE-U1-202007 008 483
- US-A- 4 692 245
- US-A- 5 783 078
- US-A1- 2008 053 886

## Beschreibung

Die Erfindung betrifft eine Filtervorrichtung für Fluide mit den Merkmalen im Oberbegriff von Anspruch 1.

Filtervorrichtungen der oben genannten Art sind in verschiedenen Bauformen im Handel frei erhältlich. In großem Umfang werden derartige Filtervorrichtungen zur Filtration von Arbeitsfluiden, wie Hydraulikflüssigkeiten, Kraftstoffen, Schmierstoffen und dergleichen, eingesetzt. Bei Fluidsystemen, namentlich Hydrauliksystemen, bei denen Filtervorrichtungen zum Einsatz kommen, hängt die Betriebssicherheit des Systems in hohem Maße von der sicheren Funktion der im System befindlichen Filtervorrichtungen ab. Mit anderen Worten gesagt, kann ein Versagen oder eine Fehlfunktion der Filtervorrichtung zu einem Ausfall oder zu einer schwerwiegenden Beschädigung des zugehörigen Systems führen und dadurch hohe wirtschaftliche Schäden verursachen.

Eine Filtervorrichtung und deren Teile sowie ein Verfahren zum Betrieb der Filtervorrichtung ist aus DE 10 2006 039 826 A1 bekannt geworden. Die Filtervorrichtung weist ein Filtergehäuseteil auf, das ein Filterelement umfaßt und das lösbar mit einem weiteren Filtergehäuseteil verbindbar ist, wobei eine Ventileinrichtung vorgesehen ist, die im miteinander verbundenen Zustand der Gehäuseteile einen Fluidweg freigibt und im getrennten Zustand der Gehäuseteile voneinander diesen zumindest teilweise sperrt. Die Ventileinrichtung weist bevorzugt ein Ventilelement auf, das über ein Ansteuerteil mindestens eines der beiden Filtergehäuseteile und/oder des Filterelements betätigbar ist, insbesondere im verbundenen Zustand der Gehäuseteile das Ventilelement öffnet und in deren voneinander getrenntem Zustand zumindest teilweise schließt. Hierbei bildet das erste Filtergehäuseteil einen Filtertopf für die Aufnahme des Filterelements und das zweite Filtergehäuseteil den Filterkopf mit den Fluidanschlüssen, insbesondere in Form eines Zu- und Ablaufs, aus. Bei fehlendem Filterelement und geschlossener Ventileinrichtung gibt eine Steuereinheit des hydraulischen Kreises eine Fehlermeldung ab und/oder schaltet den hydraulischen Kreis ab.

DE 92 15 351 U offenbart eine Filtervorrichtung zum Filtern von Fluiden mit einem Filterelement sowie mit einem Vorspann- und einem Überlastventil, das im Nebenschluss zu dem Filterelement und dem Vorspannventil angeordnet ist, mit einer ersten Anschlußstelle zum Zuführen des ungefilterten Fluids von einer Verbraucherstelle, die als Teil eines Fluidkreises von einer Fluidpumpe versorgt ist, und mit einer zweiten Anschlussstelle zwischen dem Filterelement und dem Vorspannventil zum Abführen des gefilterten Fluids, wobei mittels eines im Nebenschluß zum Filterelement angeordneten differenzdruckgesteuerten Ventil in Abhängigkeit von dem Differenzdruck am Filterelement eine Verbindung zwischen der zweiten und einer dritten Anschlußstelle herstellbar ist, die an den Fluidkreis zwischen der Fluidpumpe und der Verbraucherstelle anschließbar ist. Hierbei kann ein Schaltventil vorgesehen sein, das bei Fehlen des Filterelements diese Verbindung zwischen der zweiten und der dritten Anschlußstelle herstellt. Weiter kann eine bewegbare Elementaufnahme für das Filterelement vorgesehen sein, die bei einem vorgebbaren Schwellenwert des Differenzdruckes am Filterelement, der kleiner ist als der Schwellenwert der notwendig ist, um das differenzdruckgesteuerte Ventil zu öffnen, entgegen der Kraft des Kraftspeichers des Ventilkolbens gegen einen Anschlag fährt.

Eine Filtervorrichtung der eingangs genannten Art ist beispielsweise aus WO 2008/022813 A1 und aus DE 20 2007 008 483 U1 bekannt. Die bekannte Filtervorrichtung für Fluide ist als Flüssigkeitsfilter für Kraftfahrzeuge ausgebildet und weist einen Filterkopf, einen Topf und ein Filterelement auf. Zur Montage wird zunächst das Filterelement in den Topf vormontiert und anschließend an den Filterkopf geschraubt. Zur Abdichtung des Filterelementes an dem Filterkopf ist ein O-Ring vorgesehen, welcher auf einem Dichtansatz des Filterelementes montiert ist und sich bei der Montage des Filterelementes mit einem am Filterkopf vorgesehenen Stutzen verpresst. Ein fluiddurchlässiges Stützrohr, welches gemeinsam mit einem Filtermedium das Filterelement bildet, weist eine konzentrisch angeordnete Stiftgeometrie auf, welche bei korrekt eingesetztem Filterelement ein Ventil öffnet, so dass der Kraftstoff aus der Filteranordnung ausströmen kann. Das Ventil ist mit einer Spiralfeder belastet, so dass das Ventil geschlossen ist, wenn kein oder kein vorschriftsmäßiges Filterelement eingebaut ist. Beim Filter-elementwechsel ist das Ventil geschlossen.

Weitere Filtervorrichtungen gehen aus der US 4 692 245 und der EP 1 731 210 A1 hervor.

Im Hinblick auf diese Problematik stellt sich die Erfindung die Aufgabe, eine Filtervorrichtung zur Verfügung zu stellen, die sich durch besondere Funktionssicherheit auszeichnet.

Erfindungsgemäß ist diese Aufgabe durch eine Filtervorrichtung gelöst, die die Merkmale des Patentanspruches 1 in seiner Gesamtheit aufweist.

Gemäß dem kennzeichnenden Teil des Anspruchs 1 besteht eine wesentliche Besonderheit der Filtervorrichtung darin, dass die Elementaufnahme zur Bildung des Fluidweges für das abgereinigte Fluid einen vom Gehäuse-Bodenteil axial in Richtung auf das in Funktionsposition befindliche Filterelement vorspringenden Aufnahmestutzen aufweist, der die Ventilanordnung enthält, dass die Endkappe einen Gewindestutzen besitzt, der beim Filtriervorgang den Fluidausgang aus dem die Reinseite bildenden Filterhohlraum des Filterelementes bildet und mit dem Aufnahmestutzen verschraubbar ist, und dass als Steuereinrichtung für die Ventilanordnung am Gewindestutzen ein Steuerkörper vorhanden ist, der im Zuge des Verschraubens mit dem Aufnahmestutzen auf die Ventilanordnung entsperrend einwirkt.

Dadurch, dass die Festlegung der Endkappe des Filterelementes durch Verschrauben mit der Elementaufnahme erfolgt, steht für den Steuerkörper aufgrund der bei der Verschraubung generierten Axialkraft eine hohe Betätigungskraft für das Entsperren der Ventilanordnung zur Verfügung, so dass eine sichere Betätigung der Ventilanordnung möglich ist, selbst wenn diese mit einer verhältnismäßig hohen Schließkraft in die Sperrstellung vorgespannt ist.

Da das die Fluidverbindung mit dem Filterelement bildende Bauteil gleichzeitig als Ventilgehäuse für die Ventilanordnung dient, ist eine besonders einfache und kompakte Bauweise realisierbar.

Es ist ferner vorgesehen, dass die Elementaufnahme eine Ventilanordnung enthält, die den Fluidweg für das abgereinigte Fluid normalerweise sperrt, jedoch durch eine Steuereinrichtung entsperrbar ist, die sich an der an der Elementaufnahme festzulegenden Endkappe des Filterelementes befindet. Dies führt zu einer Erhöhung der Funktionssicherheit der Vorrichtung in zweifacher Hinsicht. Zum einen ist die Gefahr vermieden, dass das betreffende System versehentlich in Betrieb genommen wird, falls vergessen wurde, ein Filterelement in das Ventilgehäuse einzubauen, weil in diesem Falle aufgrund des Fehlens der für die Entsperrung der Ventilanordnung erforderlichen Steuereinrichtung an der Endkappe des zu benutzenden Filterelementes die Ventilanordnung im Sperrzustand verbleibt. Als weiterer, besonders wesentlicher Sicherheitsaspekt kommt hinzu, dass der Betrieb der Vorrichtung auch nur bei Verwendung eines Filterelementes möglich ist, das an der an der Elementaufnahme festzulegenden Endkappe die Steuereinrichtung aufweist, die geeignet ist, die Ventilanordnung zu entsperren.

Somit ist nicht nur ausgeschlossen, dass ein für den jeweiligen, speziellen Einsatz ungeeignetes Filterelement, das die jeweils geltenden, die Betriebssicherheit gewährleistenden Spezifikationen nicht erfüllt, weil es beispielsweise nicht einer entsprechenden Druckstufe zugeordnet ist oder eine ungeeignete Filterfeinheit aufweist, zum Einsatz kommt, sondern es ist auch die Gefahr vermieden, dass gegebenenfalls ein sog. auf dem Markt befindliches "Billig-Element" zum Einsatz gebracht wird, das die geltenden Sicherheitsstandards nicht erfüllt.

Hinsichtlich der Gestaltung der Ventilanordnung kann die Anordnung so getroffen sein, dass die Ventilanordnung einen an der Innenwand des Aufnahmestutzens vorstehenden Ringkörper aufweist, der den Ventilsitz für einen axial bewegbaren Ventilkörper bildet, der durch eine Federanordnung in Richtung auf die Endkappe in die Sperrstellung vorgespannt ist.

Bei solcher Gestaltung der Ventilanordnung kann der Steuerkörper am Gewindestutzen einen axialen Vorsprung bilden, der beim Verschrauben den Ventilkörper beaufschlagt und ihn gegen die Kraft der Federanordnung aus der Sperrstellung bewegt. Eine solche Gestaltung zeichnet sich durch eine besonders einfache, kostengünstige Gestaltung sowohl hinsichtlich des Gewindestutzens des Filterelementes als auch der Elementaufnahme aus.

Bei vorteilhaften Ausführungsbeispielen kann die Ventilanordnung einen an der Innenwand des Aufnahmestutzens vorstehenden Ringkörper aufweisen, der den Ventilsitz für den plattenförmigen Ventilkörper bildet. Eine derartige Ventilanordnung in Form eines Plattenventils ist kostengünstig herstellbar.

Der Aufnahmestutzen der Elementaufnahme eignet sich jedoch gleichermaßen auch als Ventilgehäuse für ein Schieberventil mit einem axiale Fluiddurchlässe aufweisende Ventilschieber, wobei der Aufnahmestutzen eine bei der Sperrstellung die Fluiddurchlässe des Schiebers schließende Endplatte aufweist.

Bei einer Gestaltung der Ventilanordnung als Plattenventil oder als Schieberventil kann an dem dem Gehäuse-Bodenteil zugewandten Endbereich im Aufnahmestutzen ein Fluiddurchlässe aufweisender Federteller zur Abstützung einer Druckfedereinrichtung vorgesehen sein, die sich andererseits am Ventilkörper abstützt, wobei der Federteller einen zentralen, in Richtung auf den Ventilkörper vorspringenden Hohlzapfen aufweisen kann, der die Führung für eine ihn umgebende Schraubenfederanordnung bildet.

Um die für die Ventilanordnung anzustrebende hohe Schließkraft auf einfache Weise zur Verfügung zu stellen, kann die Schraubenfederanordnung durch ein Federpaket aus zwei zueinander koaxial angeordneten Schraubenfedern gebildet sein.

Filtervorrichtungen der hier in Betracht stehenden Art können mit einer Verschmutzungsanzeige ausgerüstet sein, die bei einem einen vorgegebenen Schwellenwert übersteigenden Staudruck auf der Rohseite des Filtergehäuses ein Anzeigesignal erzeugt. Dank der hohen Betätigungskraft, die im Zuge der Verschraubung des Gewindestutzens mit dem Aufnahmestutzen dem Steuerkörper für seine Betätigung der Ventilanordnung zur Verfügung steht, eröffnet sich die vorteilhafte Möglichkeit, die Schließkraft der Federanordnung der Ventilanordnung derart hoch zu bemessen, dass die Ventilanordnung selbst bei einem am Dichtkörper im Öffnungssinne wirkenden Fluiddruck, der höher als der das Anzeigesignal erzeugende Schwellenwert ist, in der Sperrstellung verbleibt. In besonders vorteilhafter Weise ergibt sich hierdurch für die Verschmutzungsanzeige eine Mehrfachfunktion. Zum einen wird in üblicher Weise das Anzeigesignal geliefert, das bei dem durch Zusetzen eines verschmutzten Filterelementes ansteigenden Staudruck das Signal für den erforderlichen Austauschvorgang des Filterelementes liefert. Zum anderen wird bei der erfindungsgemäß vorgesehenen, durch die Federanordnung erzeugten hohen Schließkraft für die Ventilanordnung ein Anzeigesignal auch dann geliefert, wenn versucht wird, die Vorrichtung versehentlich ohne eingesetztes oder mit zwar eingesetztem, aber ungeeignetem Filterelement zu betreiben, weil sich dank der erfindungsgemäß vorgesehenen Sperrcharakteristik der Ventilanordnung vor deren Öffnen ein das Signal der Verschmutzungsanzeige auslösender Staudruck aufbaut.

Nachstehend ist die Erfindung anhand von in der Zeichnung dargestellten Ausführungsbeispielen im Einzelnen erläutert. Es zeigen:
- Fig. 1: einen Längsschnitt einer dem Stand der Technik entsprechenden Filtervorrichtung;
- Fig. 2: einen Längsschnitt eines Ausführungsbeispieles der erfindungsgemäßen Filtervorrichtung, wobei der Zustand dargestellt ist, bei dem sich ein für die Benutzung geeignetes Filterelement im Filtergehäuse in der Funktionsposition befindet;
- Fig. 3: einen abgebrochen und gegenüber Fig. 2 vergrößert dargestellten Längsschnitt des bodenseitigen Bereichs des Ausführungsbeispieles von Fig. 2;
- Fig. 4: eine näherungsweise im Maßstab von Fig. 3 und aufgeschnitten gezeichnete perspektivische Schrägansicht lediglich des Aufnahmestutzens des Ausführungsbeispieles;
- Fig. 5: eine abgebrochen, schematisch vereinfacht und teilweise aufgeschnitten gezeichnete perspektivische Schrägansicht eines Endabschnittes eines für die Benutzung bei der erfindungsgemäßen Filtervorrichtung vorgesehenen Filterelementes;
- Fig. 6: eine der Fig. 3 ähnliche Schnittdarstellung, wobei jedoch ein zweites Ausführungsbeispiel gezeigt ist und der Zustand dargestellt ist, bei dem ein für die Benutzung geeignetes Filterelement noch nicht vollständig in die Funktionsposition eingesetzt ist;
- Fig. 7: eine der Fig. 4 ähnliche Darstellung, wobei jedoch der Aufnahmestutzen des zweiten Ausführungsbeispieles gezeigt ist;
- Fig. 8: eine der Fig. 7 entsprechende Darstellung, wobei jedoch die Ventilanordnung des Aufnahmestutzens im entsperrten Zustand gezeigt ist; und
- Fig. 9: eine der Fig. 5 entsprechende und demgegenüber in größerem Maßstab gezeichnete Darstellung des Endabschnittes eines Filterelementes für die Benutzung beim zweiten Ausführungsbeispiel der Filtervorrichtung.

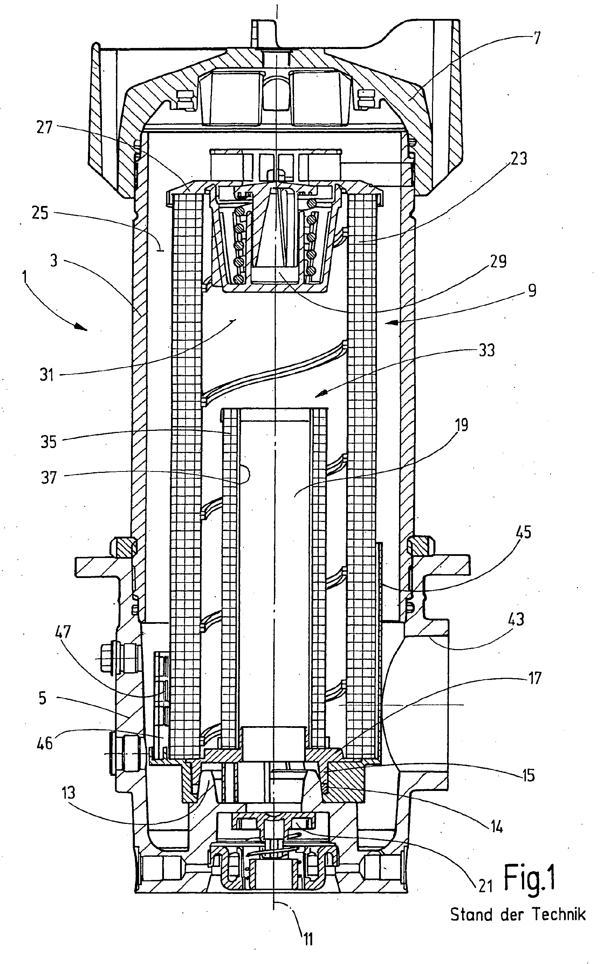

Eine in Fig. 1 gezeigte Filtervorrichtung üblicher Art mit einem als Ganzes mit 1 bezeichneten, hohlzylinderförmigen Filtergehäuse weist ein Hauptteil 3 und ein Bodenteil 5 auf, die miteinander verschraubt sind. Das dem Bodenteil 5 entgegengesetzte obere Ende des Hauptteiles 3 ist durch einen verschraubten Gehäusedeckel 7 verschließbar. Im Gehäuse 1 ist ein als Ganzes mit 9 bezeichnetes Filterelement koaxial zur Längsachse 11 des Gehäuses 1 aufnehmbar. Zur Positionierung und Lagefixierung befindet sich am Bodenteil 5 eine Elementaufnahme 13 in Form eines Hohlkörpers, dessen dem Filterelement 9 zugewandter oberer Umfangsrand zur Positionierung des Filterelementes 9 unter Bildung einer Abdichtung 14 mit einem Anschlussstutzen 15 zusammenwirkt, der sich an der dem Bodenteil 5 zugewandten Endkappe 17 des Filterelementes 9 befindet. Der Anschlussstutzen 15 bildet eine Fluidverbindung zum inneren Filterhohlraum 19 innerhalb des Filterelementes 9, der beim Filtrationsvorgang die Reinseite bildet. Das über den Anschlussstutzen 15 aus der Reinseite austretende, abgereinigte Fluid durchströmt die Elementaufnahme 13 und kann aus dem Bodenteil 5 über ein den Gehäuseausgang in üblicher Weise absicherndes Bodenventil 21 austreten.

Bei der Darstellung von Fig. 1 ist das Filterelement 9 als Zwei-Stufenelement ausgeführt, wobei ein an der Außenseite des Filterelementes 9 befindliches Filtermaterial 23 gröberer Filterfeinheit mit seiner Außenseite an den beim Filtrationsvorgang die Rohseite bildenden, äußeren Gehäuseraum 25 angrenzt und ein Vorfilter bildet. Der untere Rand des Filtermaterials 23 ist bodenseitig von der Endkappe 17 eingefasst. Das obere Ende des Filtermaterials 23 ist von einer oberen Deckkappe 27 eingefasst, an der eine Bypassventilanordnung 29 vorgesehen ist, die bei einem vorgegebenen, rohseitigen Druckniveau einen Durchstrom vom Raum 25 zum Vorfiltrationsraum 31 an der Innenseite des Filtermaterials 23 ermöglicht. Bei der zweistufigen Ausbildung des Filterelementes 9 ist der Vorfiltrationsraum 31 nicht unmittelbar mit dem Anschlussstutzen 15 der Endkappe 17 in Verbindung, sondern dem Anschlussstutzen 15 vorgeschaltet befindet sich eine Feinfiltereinheit 33 mit einem Filtermaterial 35 größerer Filterfeinheit, das ein fluiddurchlässiges Stützrohr 37 umgibt, das zum Anschlussstutzen 15 der Endkappe 17 offen ist und zusammen mit dem unteren Rand des Filtermaterials 35 an der Außenseite des Anschlussstutzens 15 an der Endkappe 17 angebracht ist. Somit ist der beim Filtrationsvorgang die Reinseite bildende Raum 19 über den Anschlussstutzen 15 mit dem Fluiddurchgang der Elementaufnahme 13 in Verbindung.

Bei der Darstellung von Fig. 1 befindet sich der Fluideinlass 43 zum rohseitigen Raum 25 am Gehäuse-Bodenteil 5 in der Nähe der Endkappe 17 des in der Funktionsposition befindlichen Filterelementes 9. Als Prallschutz ist an der Außenseite der Endkappe 17 in dem dem Einlass 43 zugewandten Umfangsbereich des Filterelementes 9 eine Abschirmplatte 45 angebracht, die sich im betreffenden Umfangsbereich gewölbt entlang der Außenseite des äußeren Filtermaterials 23 erstreckt. In dem vom Anströmbereich abgekehrten, dem Fluideinlass 43 entgegengesetzten Leebereich, in dem ein strömungsberuhigter Schmutzauffangkorb 46 gebildet ist, befindet sich eine Fangmagneteinrichtung 47.

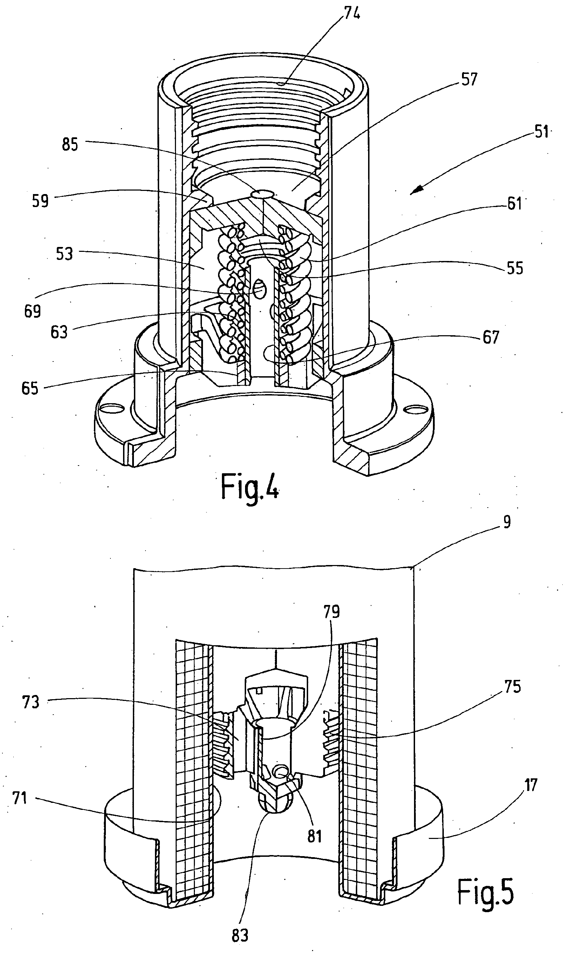

Nachstehend sind die Unterschiede der erfindungsgemäßen Bauweise gegenüber der dem Stand der Technik entsprechender Bauweise von Fig. 1 erläutert. Wiederum ist das Filterelement 9 als Zwei-Stufenelement ausgeführt, so dass der Innenraum des Filtergehäuses 1, wie zuvor gezeigt, in einen an den Fluideinlass 43 anschließenden, die Rohseite bildenden Raum 25, in einen Vorfiltrationsraum 31 und einen die Reinseite bildenden inneren Filterhohlraum 19 unterteilt ist. Die wesentlichen Unterschiede gegenüber dem Stand der Technik liegen jedoch in der Bauweise der Elementaufnahme 13 und der Bauweise der daran in der Funktionsposition festzulegenden Endkappe 17 des Filterelementes 9. Hinsichtlich der Gestaltung der Elementaufnahme 13 besteht die wesentliche Besonderheit darin, dass sie einen vom Gehäuse-Bodenteil axial in Richtung auf das Filterelement 9 vorspringenden Aufnahmestutzen 51 aufweist, der in Fig. 4 gesondert dargestellt ist und beim vorliegenden Ausführungsbeispiel ein Zusatzbauteil der Elementaufnahme 13 bildet, das beim dargestellten Ausführungsbeispiel mit dem übrigen Teil der Elementaufnahme 13 durch Schrauben verbunden ist und einen axialen Fortsatz der Elementaufnahme 13 bildet. Das Innere des Aufnahmestutzens 51 bildet nicht nur den Fluidweg 53 für aus der Reinseite 19 des Filterelementes 9 austretendes Fluid, sondern bildet auch das Ventilgehäuse einer den Fluidweg 53 normalerweise sperrenden Ventilanordnung 55. Diese weist einen scheibenförmigen Dichtkörper 57 auf, der durch Federkraft in axialer Bewegungsrichtung gegen einen an der Innenwand des Aufnahmestutzens 51 vorstehenden Ringkörper 59 vorgespannt ist, der einen ringförmigen Ventilsitz 60 für den Dichtkörper 57 bildet. Zur Erzeugung der diesen vorspannenden Federkraft ist eine Federanordnung vorgesehen, bestehend aus zwei ein Federpaket bildenden, zueinander koaxial angeordneten Schraubenfedern 61 und 63, die sich einerseits an einem Federteller 65 abstützen und sich andererseits an der Unterseite des Dichtkörpers 57 abstützen. Der im Aufnahmestutzen festgelegte Federteller 65 weist einen zentralen, in Richtung auf den Dichtkörper 57 vorspringenden Hohlzapfen 57 als Führung für die ihn umgebenden Schraubenfedern 61 und 63 auf und weist Fluiddurchlässe 69 auf, die bei dem geöffneten Zustand der Ventilanordnung 55 die Fortsetzung des Fluidweges 53 bilden.

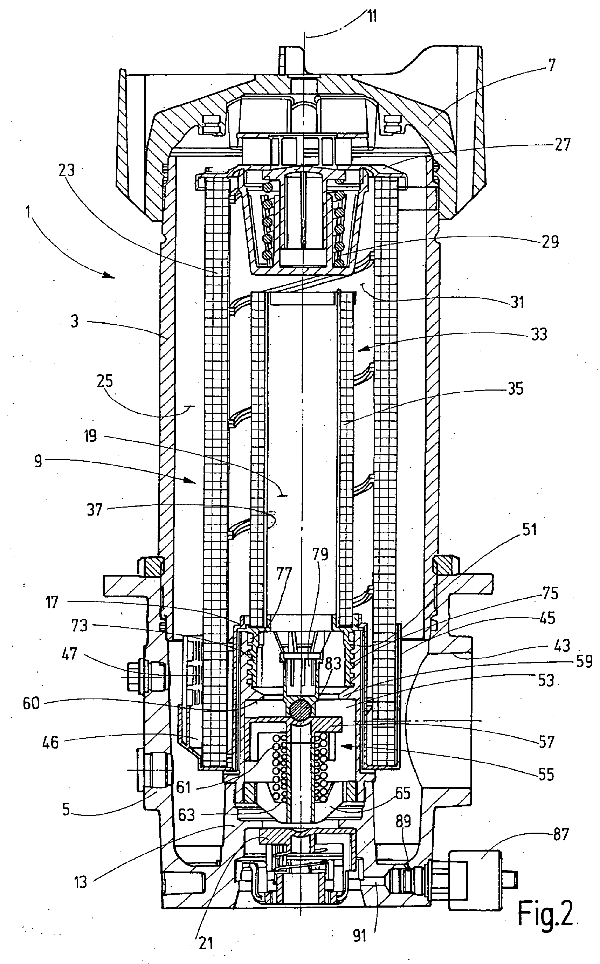

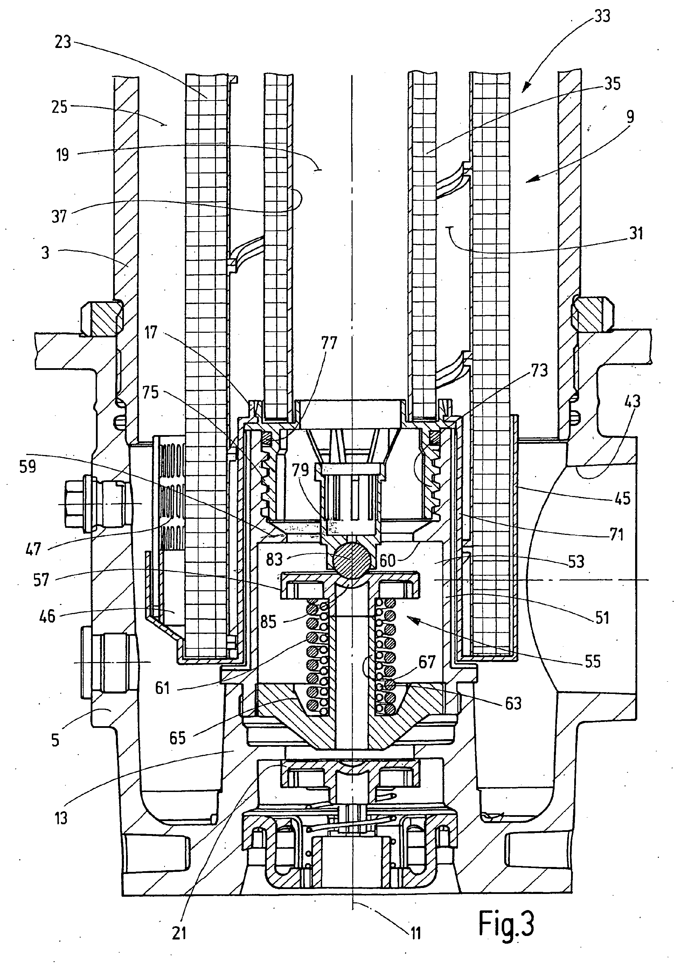

Für die Zusammenwirkung mit dem Aufnahmestutzen 51 weist die Endkappe 17 des zugeordneten Filterelementes 9, wie bereits erwähnt, eine spezielle Gestaltung auf, die den Fig. 2, 3 und 5 entnehmbar ist. Wie ersichtlich, weist die Endkappe 17 innerhalb eines die Außenseite des Aufnahmestutzens 51 übergreifenden Verbindungsteiles 71 (Fig. 5) einen koaxial vorspringenden Gewindestutzen 73 auf, der mit einem Außengewinde 75 versehen ist, mittels dessen er mit einem Innengewinde 74 am oberen Endbereich des Aufnahmestutzens 51 verschraubbar ist, wobei eine am Anfang des Außengewindes 75 befindliche Dichtungsanordnung 77 eine Abdichtung bildet. Innerhalb des Gewindestutzens 53 befindet sich eine Steuereinrichtung, die die Ventilanordnung 55 aus der normalen Sperrstellung in die Offenstellung steuert, wenn ein für die Benutzung vorgesehenes Filterelement 9 durch Verschrauben des Gewindestutzens 73 mit dem Aufnahmestutzen 51 in die Funktionsposition gebracht ist, wie sie in Fig. 2 und 3 dargestellt ist. Die Steuereinrichtung weist einen Steuerkörper in Form eines koaxialen Vorsprunges 79 innerhalb des Gewindestutzens 53 auf, wobei der Vorsprung 79 einen Hohlkörper mit Fluiddurchlässen 81 (Fig. 5) bildet, an dessen dem Dichtkörper 57 zugewandten Ende sich eine Kugel 83 befindet, die beim Verschrauben des Gewindestutzens 73 mit dem Aufnahmestutzen 51 die Schraubenkraft als Stellkraft auf einen vertieften Kugelsitz 85 des Dichtkörpers 57 überträgt, um ihn gegen die Kraft der Schraubenfedern 61, 63 vom Ventilsitz 60 am Ringkörper 59 abzuheben, so dass sich der in Fig. 2 und 3 gezeigte Betriebszustand ergibt, bei dem der Fluidweg 53 durch die Elementaufnahme 13 freigegeben ist.

Dadurch, dass die Verbindung zwischen Filterelement 9 und Elementaufnahme 13 durch Verschrauben des Gewindestutzens 73 der Endkappe 17 des Filterelementes 9 mit dem Aufnahmestutzen 51 der Elementaufnahme 13 erfolgt, steht für die Steuereinrichtung zur Betätigung der Ventilanordnung 55 beim Einschrauben des Gewindestutzens 73 eine hohe Betätigungskraft zur Verfügung, die über die Kugel 83 den Dichtkörper 57 gegen die Schließkraft bewegt. Dadurch besteht die Möglichkeit, das Federpaket aus den Schraubenfedern 61 und 63 so auszulegen, dass der Dichtkörper 57 auch bei einer hohen Druckdifferenz innerhalb des Aufnahmestutzens 51, die die Ventilanordnung 55 zu öffnen sucht, in der Sperrstellung verbleibt. Dadurch ist nicht nur sichergestellt, dass die Filtervorrichtung in einem Falle, wo versehentlich kein Filterelement 9 in das Filtergehäuse 1 eingesetzt ist, betrieben werden kann, weil der betriebliche Systemdruck nicht ausreicht, um die Ventilanordnung 55 zu entsperren, sondern es eröffnet sich auch die vorteilhafte Möglichkeit der Erzeugung eines Anzeigesignales in Verbindung mit einer üblicherweise bei derartigen Filtervorrichtungen vorgesehenen Verschmutzungsanzeige 87. Die Fig. 2 zeigt am Bodenteil 5 des Filtergehäuses 1 eine derartige Verschmutzungsanzeige 87, die aufgrund einer vorgegebenen Druckdifferenz zwischen einem zur Rohseite 25 führenden Kanal 89 und einem zur Umgebung führenden Kanal 91 ein elektrisches Anzeigesignal erzeugt. Die vorgegebene, signalerzeugende Druckdifferenz ist so gewählt, dass ein Anstieg des Staudruckes am Fluideinlass 43 signalisiert wird, der einem Verschmutzungszustand des Filterelementes 9 entspricht, bei dem das Filterelement 9 auszuwechseln ist.

Wegen der erwähnt hohen Betätigungskraft, die für das Entsperren der Ventilanordnung 55 zur Verfügung steht, kann die Federvorspannung der Ventilanordnung 55 so gewählt werden, dass die Ventilanordnung 55 gesperrt bleibt, selbst wenn eine Druckdifferenz wirksam ist, bei der die Verschmutzungsanzeige 87 anspricht. Somit wird durch die Ventilanordnung 55 nicht nur ein Betrieb der Vorrichtung ohne eingesetztes Filterelement oder mit einem eingesetzten "falschen" Filterelement verhindert, das keine die Ventilanordnung 55 entsperrende Steuereinrichtung enthält, sondern es erfolgt über die Verschmutzungsanzeige 87, als Zusatzfunktion derselben, eine Signalisierung dieses unzulässigen Betriebszustandes.

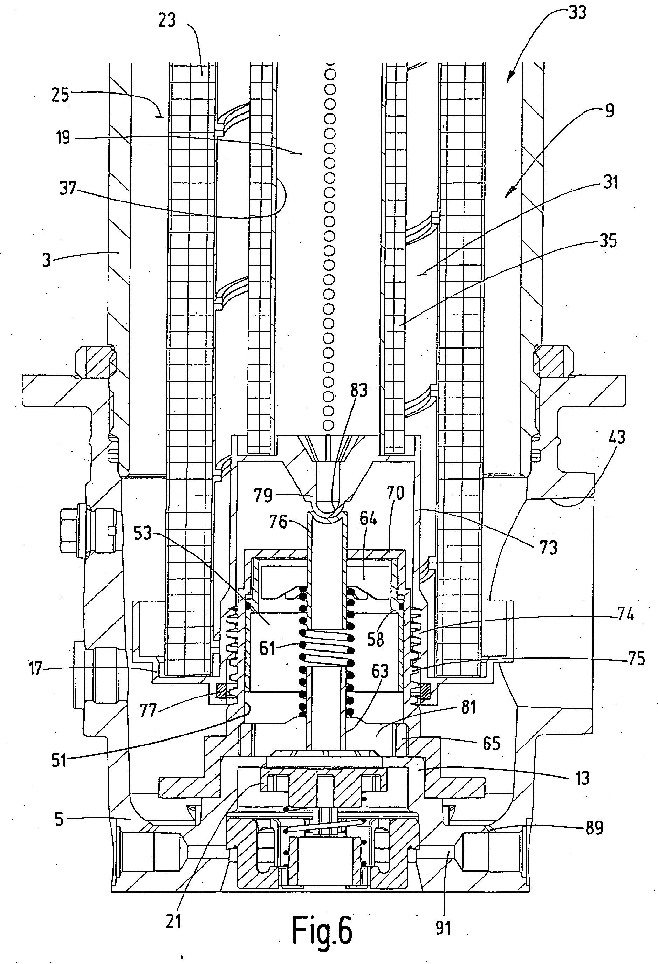

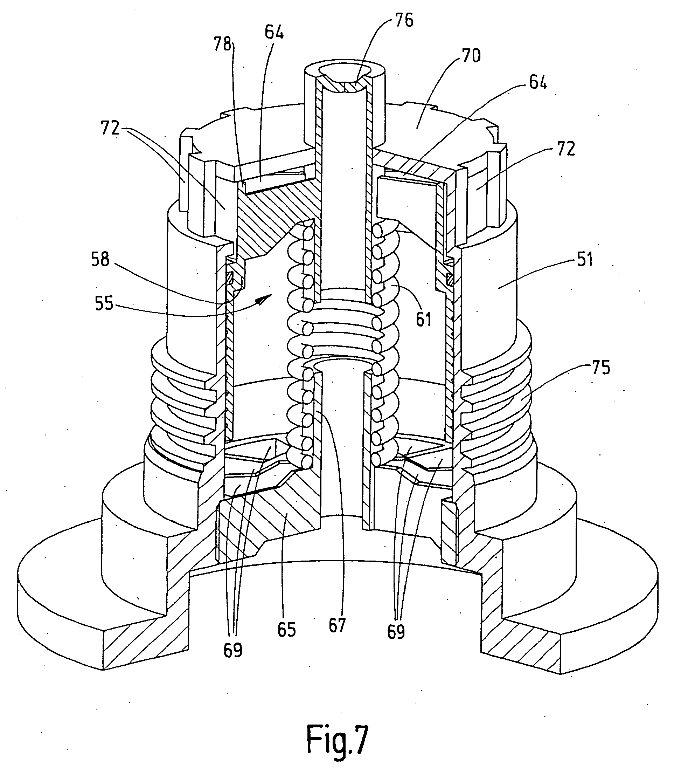

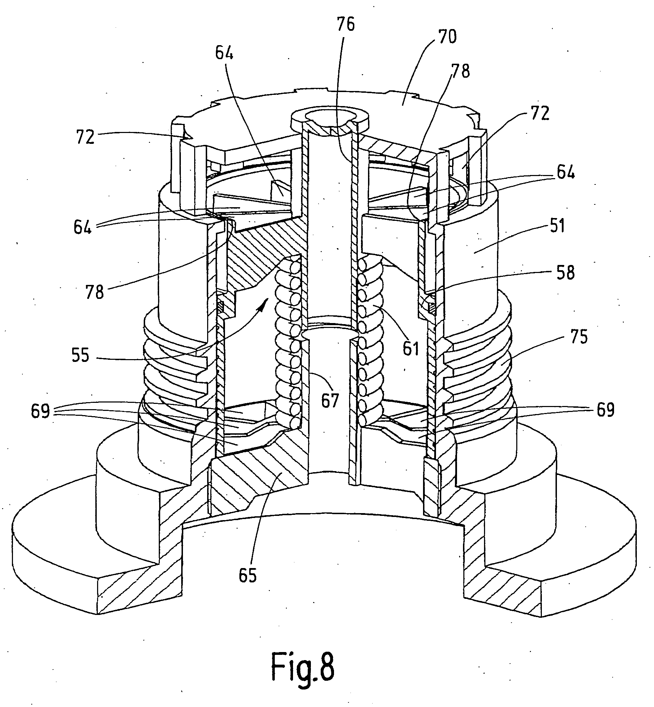

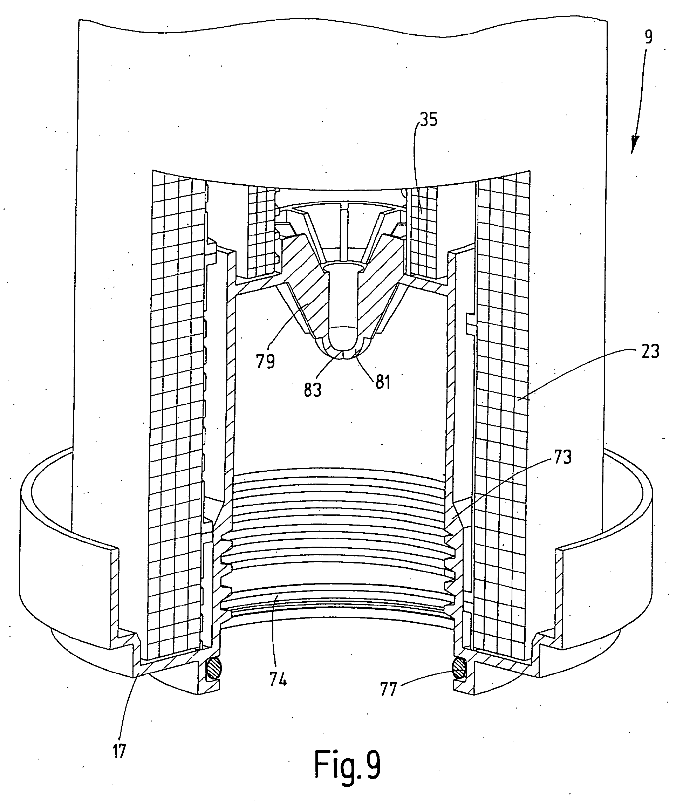

Das in Figuren 6 bis 9 gezeigte zweite Ausführungsbeispiel unterscheidet sich vom ersten Ausführungsbeispiel insofern, als die Ventilanordnung 55 nicht in Form eines Plattenventiles, sondern in Form eines Schieberventiles gestaltet ist. Wie beim ersten Ausführungsbeispiel bildet der Aufnahmestutzen 51 der Elementaufnahme 13 das Ventilgehäuse für den darin befindlichen Ventilkörper in Form eines Ventilschiebers 58. Die näheren Einzelheiten des Schieberventiles sind den Fig. 7 und 8 entnehmbar. Die Fig. 9 zeigt die gegenüber Fig. 5 abgewandelte Gestaltung des Gewindestutzens 73 an der Endkappe 17 des Filterelementes 9. Anders als beim zuvor beschriebenen Ausführungsbeispiel weist der Gewindestutzen 73 ein Innengewinde 74 auf, und der Aufnahmestutzen 51 an der Elementaufnahme 13 ist dementsprechend mit Außengewinde 75 versehen. Wie zuvor, befindet sich im Inneren des Gewindestutzens 73 ein axial vorspringender Steuerkörper in Form eines Vorsprunges 79 mit einer Endkugel 83, an der sich ein Fluiddurchlass 81 befindet. Anders als beim erstbeschriebenen Beispiel ist der Aufnahmestutzen 51 an dem dem Filterelement 9 zugewandten Ende nicht offen, sondern weist eine Endplatte 70 auf, unterhalb deren Fluideingänge 72 einen Fluideintritt ins Innere des Aufnahmestutzens 51 ermöglichen, wenn sich die Ventilanordnung im entsperrten Zustand befindet, wie er in Fig. 8 gezeigt ist, wo der Ventilschieber 58 gegen die Kraft der Feder 61 verschoben ist. Für diese Verschiebebewegung in Zusammenwirkung mit dem Vorsprung 79 am Gewindestutzen 73 weist der Ventilschieber 58 einen die Endplatte 70 durchgreifenden Schaft 76 auf. Die Fig. 7 zeigt die Sperrstellung des Schieberventils, bei der Schließkanten 78 des Ventilschiebers 58 an der Innenseite der Endplatte 70 anliegen, so dass kein Fluid durch die seitlichen Eingänge 72 eintreten kann. Wenn bei der Verschraubung eines geeigneten Filterelementes 9 mit dem Aufnahmestutzen 51 der Ventilschieber 58 von der Endplatte 70 wegbewegt wird, was in Fig. 8 dargestellt ist, gelangt über die Eingänge 72 eintretendes Fluid durch Fluiddurchlässe 64 des Ventilschiebers 58 ins Innere des Aufnahmestutzens 51, so dass die Ventilanordnung 55 entsperrt ist.

## Patentansprüche

1. Filtervorrichtung für Fluide, mit einem Filtergehäuse (1), in dem mindestens ein eine Längsachse (11) definierendes Filterelement (9) in Form einer Filterpatrone aufnehmbar ist, die an zumindest einem Ende eine eine Einfassung für den betreffenden Endrand des Filtermaterials (23, 35) bildende Endkappe (17) aufweist, die zur Lagefixierung des Filterelementes (9) in seiner Funktionsposition an einer mit dem Bodenteil (5) des Filtergehäuses (1) zusammenwirkenden Elementaufnahme (13) festlegbar ist, die für aus dem Filterhohlraum (19) des Filterelementes (9) austretendes, abgereinigtes Fluid einen Fluidweg bildet, wobei die Elementaufnahme (13) eine den Fluidweg (35) sperrende Ventilanordnung (55) enthält und dass an der an der Elementaufnahme (13) festzulegenden Endkappe (17) des Filterelementes (9) eine Steuereinrichtung (79, 83) vorgesehen ist, die bei der Funktionsposition die Ventilanordnung (55) entsperrt, **dadurch gekennzeichnet, dass** die Elementaufnahme (13) zur Bildung des Fluidweges (53) für das abgereinigte Fluid einen vom Gehäuse-Bodenteil (5) axial in Richtung auf das in Funktionsposition befindliche Filterelement (9) vorspringenden Aufnahmestutzen (51) aufweist, der die Ventilanordnung (55) enthält, dass die Endkappe (17) einen Gewindestutzen (73) besitzt, der beim Filtriervorgang den Fluidausgang aus dem die Reinseite bildenden Filterhohlraum (19) des Filterelementes (9) bildet und mit dem Aufnahmestutzen (51) verschraubbar ist, und dass als Steuereinrichtung für die Ventilanordnung (55) am Gewindestutzen (73) ein Steuerkörper (79, 83) vorhanden ist, der im Zuge des Verschraubens mit dem Aufnahmestutzen (51) auf die Ventilanordnung (55) entsperrend einwirkt.

2. Filtervorrichtung nach Anspruch 1, **dadurch gekennzeichnet, dass** die Ventilanordnung (55) einen an der Innenwand des Aufnahmestutzens (51) axial bewegbaren Ventilkörper (57, 58) aufweist, der durch eine Federanordnung (61, 63) in Richtung auf die Endkappe (17) in die Sperrstellung vorgespannt ist.

3. Filtervorrichtung nach Anspruch 2, **dadurch gekennzeichnet, dass** der Steuerkörper am Gewindestutzen (73) einen axialen Vorsprung (79) bildet, der beim Verschrauben den Ventilkörper (57, 58) beaufschlagt und ihn gegen die Kraft der Federanordnung (61, 63) aus der Sperrstellung bewegt.

4. Filtervorrichtung nach Anspruch 3, **dadurch gekennzeichnet, dass** die Ventilanordnung (55) einen an der Innenwand des Aufnahmestutzens (51) vorstehenden Ringkörper (59) aufweist, der den Ventilsitz (60) für den plattenförmigen Ventilkörper (57) bildet.

5. Filtervorrichtung nach Anspruch 4, **dadurch gekennzeichnet, dass** der Gewindestutzen (73) mit Außengewinde (75) versehen und mit einem im Aufnahmestutzen (51) befindlichen Innengewinde (74) verschraubbar ist.

6. Filtervorrichtung nach Anspruch 3, **dadurch gekennzeichnet, dass** der Ventilkörper der Ventilanordnung (55) durch einen Ventilschieber (58) mit axialen Fluiddurchlässen (64) gebildet ist und dass der Aufnahmestutzen (51) eine bei der Sperrstellung die Fluiddurchlässe (64) des Schiebers (58) schließende Endplatte (70) aufweist.

7. Filtervorrichtung nach Anspruch 6, **dadurch gekennzeichnet, dass** der Gewindestutzen (73) der Endkappe (17) mit Innengewinde (74) versehen und mit einem am Aufnahmestutzen (51) befindlichen Außengewinde (75) verschraubbar ist.

8. Filtervorrichtung nach einem der Ansprüche 2 bis 7, **dadurch gekennzeichnet, dass** die Ventilanordnung (55) einen an dem dem Gehäuse-Bodenteil (5) zugewandten Endbereich im Aufnahmestutzen (51) befestigten, Fluiddurchlässe (69) aufweisenden Federteller (65) zur Abstützung einer Druckfedereinrichtung (61, 63) aufweist, die sich andererseits am Ventilkörper (57, 58) abstützt.

9. Filtervorrichtung nach Anspruch 8, **dadurch gekennzeichnet, dass** der Federteller (65) einen zentralen, in Richtung auf den Dichtkörper (57) vorspringenden Hohlzapfen (67) aufweist, der die Führung für eine ihn umgebende Schraubenfederanordnung (61, 63) bildet.

10. Filtervorrichtung nach Anspruch 8 oder 9, **dadurch gekennzeichnet, dass** die Schraubenfederanordnung durch ein Federpaket aus zwei zueinander koaxial angeordneten Schraubenfedern (61, und 63) gebildet ist.

11. Filtervorrichtung nach einem der Ansprüche 2 bis 10, **dadurch gekennzeichnet, dass** sie eine Verschmutzungsanzeige (87) aufweist, die bei einem einen vorgegebenen Schwellenwert übersteigenden Staudruck auf der Rohseite (25) des Filtergehäuses (1) ein Anzeigesignal erzeugt, und dass die Schließkraft der Federanordnung (61, 63) der Ventilanordnung (55) derart bemessen ist, dass diese bei einem am Dichtkörper (57) im Öffnungssinne wirkenden Fluiddruck, der höher als der das Anzeigesignal erzeugende Schwellenwert ist, in der Sperrstellung verbleibt.

## Claims

1. A filtering device for fluids comprising a filter housing (1) in which at least one filtering element (9), which defines a longitudinal axis (11), can be accommodated in the form of a filter cartridge, which on at least one end has an end cap (17) forming an enclosure for the respective end edge of the filter material (23, 25) and which can be fixed on an element receiver (13) which interacts with the bottom part (5) of the filter housing (1) in order to fix the position of the filter element (9) in its operating position and which forms a fluid path (35) for the cleaned fluid which emerges from the filter cavity (19) of the filter element (9), the element receiver (13) containing a valve arrangement (55) which blocks the fluid path (35) and a control device (79, 83) being provided on the end cap (17) of the filter element (9) which is to be fixed on the element receiver (13), which control device unblocks the valve arrangement (55) in the operating position, **characterised in that** the element receiver (13) for forming the fluid path (53) for the cleaned fluid has a seating connection (51) which projects axially from the bottom part of the housing (5) towards the filter element (9) located in the operating position and which contains the valve arrangement (55), that the end cap (17) has a threaded connection (73) which, during the filtering process, forms the fluid outlet from the filter cavity (19) of the filter element (9) which forms the clean side and can be screwed to the seating connection (51), and that a control body (79, 83) is provided as a control device for the valve arrangement (55) on the threaded connection (73), which control body, while being screwed to the seating connection (51), acts on the valve arrangement (55) to unblock it.

2. The filter device according to Claim 1, **characterised in that** the valve arrangement (55) has a valve body (57, 58) which is axially movable on the inside wall of the seating connection (51) and which is pre-loaded by a spring arrangement (61, 63) in the direction of the end cap (17) into the blocking position.

3. The filter device according to Claim 2, **characterised in that** the control body on the threaded connection (73) forms an axial projection (79) which acts on the valve body (57, 58) during the screw coupling process and moves it out of the blocking position against the force of the spring arrangement (61, 63).

4. The filter device according to Claim 3, **characterised in that** the valve arrangement (55) has a ring body (59) which projects on the inside wall of the seating connection (51) and which forms the valve seat (60) for the plate-shaped valve body (57).

5. The filter device according to Claim 4, **characterised in that** the threaded connection (73) is provided with an external thread (75) and can be screwed to an internal thread (74) which is located in the seating connection (51).

6. The filter device according to Claim 3, **characterised in that** the valve body of the valve arrangement (55) is formed by a valve spool (58) with axial fluid passages (64), and that the seating connection (51) has an end plate (70) which closes the fluid passages (64) of the spool (58) in the blocking position.

7. The filter device according to Claim 6, **characterised in that** the threaded connection (73) of the end cap (17) is provided with an internal thread (74) and can be screwed to an external thread (75) which is located on the seating connection (51).

8. The filter device according to any of Claims 2 to 7, **characterised in that** the valve arrangement (55) has a spring plate (65) which has fluid passages (69) on the end region facing the housing bottom part (5) fastened in the seating connection (51) for supporting a compression spring device (61, 63) which is supported on the other hand on the valve body (57, 58).

9. The filter device according to Claim 8, **characterised in that** the spring plate (65) has a central hollow pin (67) which projects in the direction of the sealing body (57) and which forms the guide for a helical spring arrangement (61, 63) which surrounds it.

10. The filter device according to Claim 8 or 9, **characterised in that** the helical spring arrangement is formed by a spring assembly of two helical springs (61 and 63) which are located coaxially to one another.

11. The filter device according to any of Claims 2 to 10, **characterised in that** it has a clogging indicator (87) which, at a back pressure that exceeds a defined threshold value on the dirty side (25) of the filter housing (1), generates an indicator signal, and that the closing force of the spring arrangement (61, 63) of the valve arrangement (55) is dimensioned such that the latter remains in the blocking position at a fluid pressure that acts on the sealing body (57) for purposes of opening and which is higher than the threshold value that generates the indicator signal.

## Revendications

1. Dispositif de filtration de fluide, comprenant une enveloppe (1) de filtre, dans laquelle peut être reçu au moins un élément (9) filtrant définissant un axe (11) longitudinal sous la forme d'une cartouche de filtre, qui a, à au moins une extrémité, une coiffe (17) d'extrémité formant une bordure pour le bord d'extrémité concerné de la matière (23, 35) filtrante, coiffe qui peut, pour l'immobilisation en position de l'élément (9) filtrant dans sa position de fonctionnement, être fixée à un logement (13) d'élément, qui coopère avec la partie (5) de fond de l'enveloppe (1) du filtre et qui forme, pour du fluide épuré sortant de la cavité (19) de filtre de l'élément (9) filtrant, un trajet de fluide, le logement (13) de l'élément contenant un agencement (55) de soupape obturant le trajet (35) de fluide et en ce qu'il est prévu, sur la coiffe (17) d'extrémité de l'élément (9) filtrant se fixant au logement (13) de l'élément, un dispositif (79, 83) de commande, qui débloque l'agencement (55) de soupape, **caractérisé en ce que** le logement (13) de l'élément a, pour la formation du trajet (53) du fluide épuré, une tubulure (51) de réception en saillie de la partie (5) de fond de l'enveloppe axialement en direction de l'élément (9) filtrant se trouvant en la position de fonctionnement, tubulure qui comporte l'agencement (55) de soupape, **en ce que** la coiffe (17) d'extrémité possède une tubulure (73) filetée, qui, lors de l'opération de filtration, forme la sortie du fluide de la cavité (19) de filtre, formant le côté propre, de l'élément (9) filtrant et pouvant se visser à la tubulure (51) de réception et **en ce qu'**il y a, comme dispositif de commande de l'agencement (55) de soupape sur la tubulure (73) filetée, un corps (79, 83) de commande, qui, au cours du vissage avec la tubulure (51) de réception, agit en déblocage sur l'agencement (55) de soupape.

2. Dispositif de filtration suivant la revendication 1, **caractérisé en ce que** l'agencement (55) de soupape a un obturateur (57, 58) mobile axialement sur la paroi intérieure de la tubulure (51) de réception, lequel est, par un agencement (61, 63) à ressort précontraint dans la direction de la coiffe (17) d'extrémité vers la position de blocage.

3. Dispositif de filtration suivant la revendication 2, **caractérisé en ce que** le corps de commande forme, sur la tubulure (73) filetée, une saillie (79) axiale, qui, au vissage, agit sur l'obturateur (57, 58) et le déplace hors de la position de blocage à l'encontre de la force de l'agencement (61, 63) de ressort.

4. Dispositif de filtration suivant la revendication 3, **caractérisé en ce que** l'agencement (55) de soupape a un corps (59) annulaire, qui est en saillie de la paroi intérieure de la tubulure (51) de réception et qui forme le siège (60) de soupape pour l'obturateur (57) en forme de plaque.

5. Dispositif de filtration suivant la revendication 4, **caractérisé en ce que** la tubulure (73) filetée est pourvue d'un filetage (75) extérieur et peut se visser dans un taraudage (74) se trouvant dans la tubulure (51) de réception.

6. Dispositif de filtration suivant la revendication 3, **caractérisé en ce que** l'obturateur de l'agencement (55) de soupape est formé par un tiroir (58) ayant des traversées (64) axiales pour du fluide et **en ce que** la tubulure (51) de réception a une plaque (70) d'extrémité fermant, en la position de blocage, les traversées (64) pour du fluide du tiroir (58).

7. Dispositif de filtration suivant la revendication 6, **caractérisé en ce que** la tubulure (73) filetée de la coiffe (17) d'extrémité est pourvue de taraudage (74) et peut se visser avec un filetage (75) se trouvant sur la tubulure (51) de réception.

8. Dispositif de filtration suivant l'une des revendications 2 à 7, **caractérisé en ce que** l'agencement (55) de soupape a, pour l'appui d'un dispositif (61, 63) à ressort de compression, qui s'appuie, d'autre part, sur l'obturateur (57, 58), une coupelle (65) de ressort fixée dans la tubulure (51) de réception à la partie d'extrémité tournée vers la partie (5) de fond de l'enveloppe et ayant des traversées (69) pour du fluide.

9. Dispositif de filtration suivant la revendication 8, **caractérisé en ce que** la coupelle (65) de ressort a un tenon (67) creux central, qui fait saillie dans la direction de l'obturateur (57) et qui forme le guidage d'un agencement (61, 63) de ressort hélicoïdal l'entourant.

10. Dispositif de filtration suivant la revendication 8 ou 9, **caractérisé en ce que** l'agencement de ressort hélicoïdal est formé par un paquet de ressorts composé de deux ressorts (61, 63) hélicoïdaux disposés coaxialement l'un à l'autre.

11. Dispositif de filtration suivant l'une des revendications 2 à 10, **caractérisé en ce qu'**il a un indicateur (87) d'encrassement, qui, pour une pression de retenue, dépassant une valeur de seuil donnée à l'avance, du côté (5) brut de l'enveloppe (1) de filtre, produit un signal d'indication, et **en ce que** la force de fermeture de l'agencement (61, 63) de ressort de l'agencement (55) de soupape est proportionnée, de manière à ce que cette dernière reste dans la position d'obturation pour une pression de fluide agissant sur l'obturateur (57) dans le sens de l'ouverture, qui est plus grande que la valeur de seuil produisant le signal d'indication.
